# FASCICULE DE BREVET EUROPEEN

(11) **EP 2 585 416 B1**
(45) Date de publication et mention de la délivrance du brevet: **04.11.2015**
(21) Numéro de dépôt: 11736430.7
(22) Date de dépôt: 23.06.2011
(51) Int. Cl.: C04B 28/02, C04B 40/06, B28C 5/02, B28C 5/42, B28C 7/16, C04B 103/32, C04B 103/44, C04B 103/22

(54) **PROCEDE DE TRANSPORT D'UNE COMPOSITION HYDRAULIQUE**
VERFAHREN FÜR DEN TRANSPORT EINER HYDRAULISCHEN ZUSAMMENSETZUNG
METHOD FOR TRANSPORTING A HYDRAULIC COMPOSITION

(30) Priorité: 24.06.2010 FR 1055067
(43) Date de publication de la demande: 01.05.2013
(73) Titulaire: Lafarge SA, 75116 Paris (FR)
(72) Inventeur: SABIO, Serge, F-38540 Saint Just Chaleyssin (FR); LOMBOIS-BURGER, Hélène, F-69003 Lyon (FR); JONNEKIN, Arnaud, F-38510 Olouise (FR); LABYAD, Abdelaziz, F-69008 Lyon (FR)
(74) Mandataire: Berruet, Laure
(86) Numéro de dépôt international: PCT/FR2011/051451
(87) Numéro de publication internationale: WO 2011/161383

(56) Documents cités:
- EP-A1- 1 535 887
- WO-A1-97/06120
- WO-A2-2007/047407
- FR-A1- 2 893 938
- GB-A- 2 377 930
- US-A- 5 634 972
- US-A1- 2009 044 726

## Description

L'invention se rapporte à un procédé de transport d'une composition hydraulique à l'état frais, notamment un béton, comprenant un liant hydraulique, des granulats et de l'eau.

Une composition hydraulique est obtenue en mélangeant un liant hydraulique, par exemple un ciment, des granulats et de l'eau. Le site de fabrication de la composition hydraulique peut être différent du site d'utilisation de la composition hydraulique. C'est le cas, par exemple, lorsque la composition hydraulique correspond à un béton fabriqué dans une centrale à béton. La composition hydraulique doit alors être transportée du site de fabrication jusqu'au site d'utilisation.

Tout au long du transport de la composition hydraulique à l'état frais du site de fabrication au site d'utilisation, la composition hydraulique doit être régulièrement mélangée pour éviter des phénomènes indésirable tels que le ressuage (remontée d'eau en surface du béton) ou la ségrégation (séparation des constituants, notamment les types différents de granulats, du béton frais). A cette fin, un camion-toupie peut être utilisé. Le camion-toupie comprend un malaxeur dans lequel la composition hydraulique est régulièrement agitée.

Il est également connu de part le document GB 2 376 462 un procédé de transport où 2 mélanges sont transportés dans un même camion sur un chantier, sans malaxage. Les 2 mélanges sont mélangés une fois le camion arrivé sur chantier.

L'utilisation d'un camion-toupie présente plusieurs problèmes : un coût d'utilisation élevé, une disponibilité moindre que d'autres moyens de transport, par exemple les camions benne, des contraintes d'utilisation généralement plus importantes que pour d'autres moyens de transport, par exemple les camions benne (notamment pour éviter les risques de devers dans les virages des routes). En outre, certains sites d'utilisation peuvent ne pas être accessibles à un camion toupie ce qui rend nécessaire la fabrication de la composition hydraulique sur place.

Il serait toutefois souhaitable de disposer d'un procédé de transport plus simple et à coût réduit d'une composition hydraulique à l'état frais, notamment un béton, comprenant un liant hydraulique, des granulats et de l'eau.Dans ce but, la présente invention se rapporte à un procédé de transport d'une composition hydraulique à l'état frais comprenant :
- de 220 à 500 kg, par mètre cube de la composition hydraulique à l'état frais, d'un liant hydraulique comprenant du ciment Portland ;
- de 400 à 1200 kg, par mètre cube de la composition hydraulique à l'état frais, d'un sable ayant un D10 supérieur à 0,1 mm et un D90 inférieur à 4 mm ;
- de 150 à 1000 kg, par mètre cube de la composition hydraulique à l'état frais, d'un gravier ayant un D10 supérieur à 4 mm et un D90 inférieur à 10 mm ;
- de 0,05 à 5 % en masse d'extrait sec par rapport à la masse du liant hydraulique d'un superplastifiant comprenant un polymère polyphosphate de polyoxyde d'alkylène, un polymère polyphosphonate de polyoxyde d'alkylène, un polymère polysulfonate de polyoxyde d'alkylène ou un polymère polycarboxylate de polyoxyde d'alkylène ; et
- de 0,01 à 0,5 % en masse d'extrait sec par rapport à la masse du liant hydraulique d'un agent modificateur de rhéologie comprenant une cellulose ou un dérivé de cellulose,
le transport étant réalisé pendant plus de dix minutes sans agitation par tout système mécanique dédié à réaliser une opération de mélange énergique de la composition hydraulique.

L'invention offre l'un des avantages décrits ci-après.

Avantageusement, la composition hydraulique à l'état frais peut être transportée par tout type de moyens de transport classiques.

L'invention offre comme autre avantage que la composition hydraulique à l'état frais peut être transportée à des sites d'utilisation qui n'auraient pas été accessibles avec des moyens de transport classiques.

Enfin l'invention a pour avantage de pouvoir être utilisée dans l'une des industries telles que l'industrie du bâtiment, l'industrie chimique (adjuvantiers) et l'industrie cimentière, dans les marchés de la construction (bâtiment, génie civil, routes ou usine de préfabrication), ou dans les centrales à béton.

D'autres avantages et caractéristiques de l'invention apparaîtront clairement à la lecture de la description et des exemples donnés à titre purement illustratifs et non limitatifs qui vont suivre.

Par l'expression « liant hydraulique », on entend selon la présente invention un matériau pulvérulent qui, gâché avec de l'eau, forme une pâte qui fait prise et durcit par suite de réactions, et qui après durcissement, conserve sa résistance et sa stabilité même sous l'eau. Le liant hydraulique peut être un ciment selon la norme EN 197-1.

Par l'expression « composition hydraulique », on entend selon la présente invention un mélange d'un liant hydraulique, avec de l'eau de gâchage, des granulats, éventuellement des adjuvants, et éventuellement des additions minérales. Une composition hydraulique peut par exemple être un béton, notament un béton hautes performances, un béton très hautes performances, un béton auto-plaçant, un béton auto-nivelant, un béton auto-compactant, un béton fibré, un béton prêt à l'emploi ou un béton coloré. Par le terme « béton », on entend également les bétons ayant subi une opération de finition telle que le béton bouchardé, le béton désactivé ou lavé, ou le béton poli. Cette définition comprend également le béton précontraint. Le terme « béton » comprend les mortiers ; dans ce cas précis le béton comprend un mélange d'un liant hydraulique, de sable, d'eau, éventuellement d'adjuvants et éventuellement d'additions minérales. Le terme « béton » selon la présente l'invention désigne indistinctement le béton frais ou le béton durci. La composition hydraulique selon la présente l'invention peut être utilisée directement sur chantier à l'état frais et coulée dans un coffrage adapté à l'application visée, ou alors en préfabrication, ou encore en tant qu'enduit sur un support solide. On appelle composition hydraulique à l'état frais la composition hydraulique avant la prise. On appelle fenêtre d'ouvrabilité la durée pendant laquelle la composition hydraulique à l'état frais peut être mise en oeuvre. La fenêtre d'ouvrabilité correspond alors à la durée pendant laquelle l'affaissement ou l'étalement de la composition hydraulique reste supérieur à un seuil, déterminé notamment en fonction du type de la composition hydraulique et de l'application prévue.

Par le terme « granulats », on entend selon la présente invention des graviers, des gravillons et/ou du sable.

Par l'expression « additions minérales », on entend selon la présente invention un matériau minéral finement divisé utilisé dans le béton afin d'améliorer certaines propriétés ou pour lui apporter des propriétés particulières. Il s'agit, par exemple, de cendres volantes (telles que définies dans la norme EN 450), de fumées de silice (telles que définies dans la norme prEN 13263 :1998 ou NF P 18-502), de laitiers (tels que définis dans la norme NF P 18-506), d'additions calcaires (telles que définies dans la norme NF P 18-508) et les additions siliceuses (telles que définies dans la norme NF P 18-509).

Par l'expression « ciment Portland », on entend selon la présente invention un ciment de type CEM I, CEM II, CEM III, CEM IV ou CEM V selon la norme « Ciment » NF EN 197-1.

Par le terme « prise », on entend selon la présente invention le passage à l'état solide de la composition hydraulique par réaction d'hydratation. La prise est généralement suivie par la période de durcissement.

Par le terme « argiles », on entend désigner selon la présente invention des silicates d'aluminium et/ou des silicates de magnésium, notamment les phyllosilicates à structure en feuillets, typiquement espacés d'environ 7 à environ 14 Angströms. Des argiles rencontrées fréquemment dans les sables peuvent être notamment la montmorillonite, l'illite, la kaolinite, la muscovite et les chlorites. Les argiles peuvent être de type 2 : 1 mais aussi de type 1 : 1 (kaolinite) ou 2 : 1 : 1 (chlorites).

Par l'expression « plastifiant/réducteur d'eau », on entend selon la présente invention un adjuvant qui, sans modifier la consistance, permet de réduire la teneur en eau d'un béton donné, ou qui, sans modifier la teneur en eau, augmente l'affaissement/l'étalement du béton, ou produit les deux effets en même temps. La norme EN 934-2 spécifie que la réduction d'eau doit être supérieure à 5 %. Les réducteurs d'eau peuvent, par exemple, être à base d'acides lignosulfoniques, d'acides carboxyliques ou d'hydrates de carbone traités.

Par l'expression « superplastifiant » ou « superfluidifiant » ou « super réducteur d'eau », on entend selon la présente invention un plastifiant/réducteur d'eau qui permet de réduire de plus de 12 % la quantité d'eau nécessaire à la réalisation d'un béton. Un superplastifiant présente une action fluidifiante puisque, pour une même quantité d'eau, l'ouvrabilité du béton est augmentée lorsque le superplastifiant est présent.

La composition hydraulique selon l'invention comprend un superplastifiant et un agent modificateur de rhéologie. La composition hydraulique peut, en outre, comprendre un agent retardateur.

### Superplastifiant

Selon un exemple de réalisation de l'invention, le superplastifiant comprend un polymère comprenant une chaîne principale et plus de trois chaînes pendantes reliées à la chaîne principale.

Le superplastifiant comprend un polymère polyphosphate de polyoxyde d'alkylène, un polymère polyphosphonate de polyoxyde d'alkylène, un polymère polysulfonate de polyoxyde d'alkylène ou un polymère polycarboxylate de polyoxyde d'alkylène (également appelés polycarboxylate polyox ou PCP). De préférence, le superplastifiant comprend un polymère polycarboxylate de polyoxyde d'alkylène.

Un exemple de superplastifiant correspond à un copolymère comprenant au moins une unité de formule (I) : 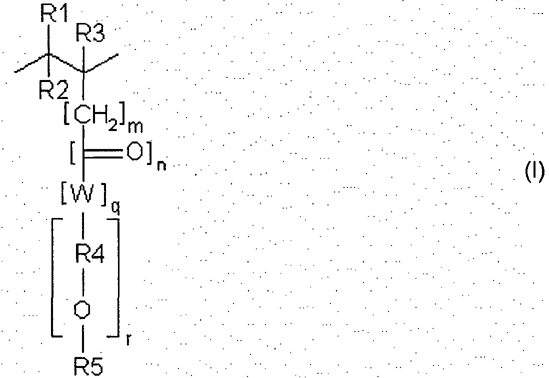 et au moins une unité de formule (II) 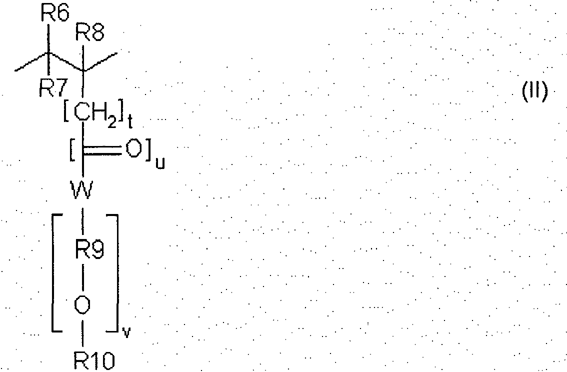
où R1, R2, R3, R6, R7 et R8 sont indépendamment un atome d'hydrogène, un radical alkyle linéaire ou ramifié en C₁ à C₂₀, ou un radical aromatique, ou un radical -COOR11 avec R11 représentant indépendamment un atome d'hydrogène, un radical alkyle linéaire ou ramifié en C₁ à C₄, un cation monovalent, divalent ou trivalent ou un groupe ammonium ;
R10 est un atome d'hydrogène, un radical alkyle linéaire ou ramifié en C₁ à C₂₀, ou un radical aromatique;
R4 et R9 sont indépendamment un radical alkyle linéaire ou ramifié en C₂ à C₂₀ ;
R5 est un atome d'hydrogène, un groupe alkyle en C₁ à C₂₀ ou un groupe anionique ou cationique, par exemple un groupe phosphonate, un groupe sulfonate, un groupe carboxylate, etc. ;
W est un atome d'oxygène ou d'azote ou un radical NH ;
m et t sont indépendamment des nombres entiers compris de 0 à 2 ;
n et u sont indépendamment des nombres entiers égaux à 0 ou 1 ;
q est un nombre entier égal à 0 ou 1 ;
r et v sont indépendamment des nombres entiers compris de 0 à 500 ;
et la masse molaire dudit copolymère est comprise de 10 000 à 400 000 daltons.

De préférence, le radical R1 ou R6 est un atome d'hydrogène. De préférence, le radical R2 ou R7 est un atome d'hydrogène. De préférence, le radical R3 ou R8 est un radical méthyle ou hydrogène. De préférence, le radical R4 ou R9 est un radical éthyle.

De préférence, le copolymère utilisé selon l'invention ou un de ses sels possède un nombre entier r de 1 à 300, de préférence de 20 à 250, plus préférentiellement de 40 à 200, encore plus préférentiellement de 40 à 150.

Le superplastifiant peut correspondre à un sel du copolymère défini précédemment.

Le copolymère peut comprendre plusieurs unités différentes selon la formule (I) ayant, notamment, des radicaux R5 différents.

Le superplastifiant peut être un superplastifiant à efficacité immédiate dont l'action fluidifiante maximale est obtenue dans les quinze premières minutes à 20°C après l'ajout d'eau au liant hydraulique pour des dosages conventionnels. Le superplastifiant peut être un superplastifiant à efficacité différée dont l'action fluidifiante maximale est obtenue après quinze premières minutes à 20°C après l'ajout d'eau au liant hydraulique pour des dosages classiques. La mesure de l'action fluidifiante du superplastifiant à efficacité immédiate et du superplastifiant à efficacité différée est mesurée par une mesure d'étalement et/ou d'affaissement.

L'augmentation de l'action fluidifiante du superplastifiant à efficacité différée peut être obtenue par une augmentation de la capacité du superplastifiant à efficacité différée à s'adsorber sur les composants minéraux (notamment les grains de ciments) de la composition hydraulique. Dans ce but, une possibilité consiste à augmenter la densité de charges anioniques du superplastifiant. Une augmentation de la densité de charges du superplastifiant peut être obtenue par deux phénomènes différents qui peuvent se produire simultanément :
- l'augmentation du nombre de charges portées par le polymère ; et
- la réduction du poids moléculaire du polymère.

La réduction du poids moléculaire du superplastifiant peut être obtenue en choisissant un superplastifiant comprenant une chaîne principale et des chaînes pendantes reliées à la chaîne principale et qui peuvent se séparer de la chaîne principale lorsque le superplastifiant est dans la composition hydraulique.

La séparation de chaînes pendantes et/ou l'augmentation du nombre de charges portées par le superplastifiant peut être obtenue en choisissant un superplastifiant comprenant des fonctions chimiques hydrolysables qui, sous l'effet des ions hydroxyde (OH⁻) dans la composition hydraulique, peuvent se transformer pour fournir des fonctions carboxylate (COO⁻). Les fonctions chimiques hydrolysables sont en particulier les anhydrides, les esters et les amides. Un polymère hydrolysable est un polymère comprenant des fonctions chimiques hydrolysables dans les conditions de basicité et dans la fenêtre d'ouvrabilité de la composition hydraulique et un monomère hydrolysable est un monomère comprenant une fonction hydrolysable dans les conditions de basicité et dans la fenêtre d'ouvrabilité de la composition hydraulique.

Des exemples de superplastifiants sont des superplastifiants qui comprennent des fonctions carboxylates et/ou sulfonates et/ou phosphonates et/ou silanes et/ou phosphates et éventuellement des chaînes polyoxyde d'alkylène. En particulier, des superplastifiants du type polyphosphate polyox ou polysulfonate polyox ou mieux encore de type polycarboxylate de polyoxyde d'alkylène (également appelés polycarboxylate polyox ou PCP) peuvent être utilisés. Un exemple de superplastifiant est celui décrit dans les documents EP-A-537872, US20030127026 et US20040149174.

Un exemple de superplastifiant est celui obtenu par polymérisation :
- d'un monomère ionique du type phosphonique, sulfonique ou carboxylique, de préférence carboxylique et avantageusement de type (méth)acrylique ; et
- d'un monomère de type (méth)acrylate de polyoxyalkylène glycol (de C₁ à C₄), par exemple de type (méth)acrylate de polyéthylène glycol (PEG), dont le poids moléculaire est par exemple de 100 à 10000, de préférence de 500 à 5000 et avantageusement de 750 à 2500.

Le ratio molaire entre l'unité selon la formule (I) et l'unité selon la formule (II) peut varier, par exemple de 90/10 à 45/55, de préférence de 80/20 à 55/45.

Il est possible d'utiliser un ou plusieurs autres monomère(s), par exemple ceux choisis parmi le :
(a) type acrylamide, par exemple N,N-diméthylacrylamide, 2,2'-diméthylamino (méth)acrylate ou ses sels, 2,2'-diméthylaminoalkyle (méth)acrylate ou ses sels avec le groupe alkyl et en particulier éthyle et propyle, et de façon générale tout monomère comprenant une fonction de type amine ou amide ;
(b) type hydrophobe, par exemple (méth)acrylate d'alkyle comprenant de 1 à 18 atomes de carbone, en particulier méthyle ou éthyle.

La quantité de cet autre monomère peut être de 5 à 25 % mol du total des monomères.

Dans le cas où le superplastifiant est un superplastifiant à action différée, l'anionicité du superplastifiant peut augmenter dans le béton dans la fenêtre d'ouvrabilité.

Des exemples de superplastifiants à efficacité différée sont décrits dans les documents EP 1 136 508, WO 2007/047407, US 2009/0312460 et PCT/US2006/039991.

La forme du superplastifiant peut varier d'une forme liquide à une forme solide, en passant par une forme cireuse.

### Agent modificateur de rhéologie ou AMR

L'agent modificateur de rhéologie comprend une cellulose ou un dérivé de cellulose. Selon un exemple de réalisation de l'invention, l'agent modificateur de rhéologie comprend un éther de cellulose. Selon une variante de l'invention, un éther de cellulose utilisé selon l'invention est la methylhydroxypropylcellulose. Selon une autre variante de l'invention, un éther de cellulose utilisé selon l'invention est la méthylcellulose.

### Agent retardateur

L'agent retardateur correspond à la définition du retardateur de prise mentionné dans la norme NF EN 934-2.

Selon un exemple de réalisation de l'invention, l'agent retardateur comprend un composé choisi parmi :
- les sucres et produits dérivés, notamment le saccharose, le glucose, les sucres réducteurs (lactose, maltose etc.), la cellobiose, le gallactose etc., les produits dérivés, par exemple la glucolactone, etc. ;
- les acides carboxyliques ou leurs sels, notamment l'acide gluconique, le gluconate, l'acide tartrique, l'acide citrique, l'acide gallique, l'acide glucoheptonique, l'acide saccharique et l'acide salicylique. Les sels associés comprennent par exemple le sel d'ammonium, le sel de métal alcalin (par exemple le sel de sodium, le sel de potassium, etc.), le sel de métal alcalino-terreux (par exemple le sel de calcium, le sel de magnésium, etc.). Cependant d'autres sels peuvent être également utilisés ;
- les acides phosphoniques et leurs sels, notamment l'acide aminotri(méthylènephosphonique), le sel, pentasodique de l'acide aminotri(méthylènephosphonique), l'acide hexaméthylène-diamine-tétra(méthylène-phosphonique), l'acide diéthylène-triamine-penta(méthylène-phosphonique et son sel de sodium) ;
- les phosphates et leurs dérivés ;
- les esters de sorbitan ;
- les alkylpolyglucosides (APG) et leurs dérivés ;
- les sels de zinc, notamment l'oxyde de zinc, le borate de zinc et les sels solubles de zinc (nitrate, chlorure) ;
- les borates, notamment l'acide borique, le borate de zinc et les sels de bore ;
- les agents de surface adaptés pour enrober la surface des grains de ciment, notamment certains éthers de cellulose et les acrylates ; et
- les agents de surface adaptés pour enrober la surface des grains de ciment, notamment les éthers de cellulose, les acrylates, les alginates, les stéarates ; et
- les mélanges de ces composés.

De préférence, l'agent retardateur comprend un acide carboxylique, un acide phosphonique ou leurs sels.

De préférence, l'agent retardateur comprend un acide hydroxycarboxylique ou un sel d'acide hydroxycarboxylique. Selon un exemple de réalisation de l'invention, l'agent retardateur comprend un gluconate.

### Composition hydraulique

Le liant hydraulique comprend un ciment Portland. Des ciments qui conviennent sont les ciments Portland décrits dans l'ouvrage "Lea's Chemistry of Cement and Concrete ». Les ciments Portland incluent les ciments de laitier, de pouzzolane, de cendres volantes, de schistes brûlés, de calcaire et les ciments composites. Il s'agit par exemple d'un ciment de type CEM I, CEM II, CEM III, CEM IV ou CEM V selon la norme « Ciment » NF EN 197-1.

La composition hydraulique comprend de 220 à 500 kg, de préférence de 250 à 450 kg du liant hydraulique par mètre cube de la composition hydraulique à l'état frais.

La composition hydraulique comprend de 220 à 500 kg, de préférence de 250 à 450 kg de ciment Portland par mètre cube de la composition hydraulique à l'état frais.

La composition hydraulique comprend de 400 à 1800 kg, de préférence de 500 à 1600 kg, plus préférentiellement de 600 à 1100 kg du sable par mètre cube de la composition hydraulique à l'état frais.

du sable par mètre cube de la composition hydraulique à l'état frais:
Le sable a un D10 supérieur à 0,1 mm et un D90 inférieur à 4 mm. Le sable peut être de toute nature minérale, calcaire, siliceuse ou silico-calcaire ou autre. Le sable peut correspondre à un mélange de sables de natures différentes. Le D90, également noté Dᵥ90, correspond au 90^{ème} centile de la distribution en volume de taille des grains. Autrement dit, 90 % des grains ont une taille inférieure au D90 et 10 % ont une taille supérieure au D90. Le D10, également noté Dᵥ10, correspond au 10^{ème} centile de la distribution en volume de taille des grains. Autrement dit, 10 % des grains ont une taille inférieure au D10 et 90 % ont une taille supérieure au D10.

La composition hydraulique comprend de 150 à 1000 kg, de préférence de 200 à 900 kg, plus préférentiellement de 300 à 900 kg du gravier par mètre cube de la composition hydraulique à l'état frais. Le gravier a un D10 supérieur à 4 mm et un D90 inférieur à 10 mm.

La composition peut, en outre, comprendre d'autres granulats, par exemple des granulats ayant une granulométrie strictement supérieure à 20 mm.

La composition hydraulique peut en outre comprendre de 5 % à 40 %, de préférence de 10 % à 30 %, plus préférentiellement de 15 % à 25 %, en masse par rapport à la masse du liant hydraulique d'un matériau particulaire (également appelé addition inorganique) ou d'un mélange de matériaux particulaires. Le matériau particulaire a par exemple une taille moyenne de particules inférieure à 100 µm. Le matériau particulaire peut comprendre des matériaux pouzzolaniques ou non pouzzolaniques ou un mélange de ceux-ci.

Le terme « particule » tel qu'utilisé dans le cadre de la présente invention doit être compris dans un sens large et correspond non seulement des particules compactes ayant plus ou moins une forme sphérique mais aussi à des particules anguleuses, des particules aplaties, des particules en forme de flocon, des particules en forme de fibres, ou des particules fibreuses, etc. On comprendra que la « taille » des particules dans le cadre de la présente invention signifie la plus petite dimension transversale des particules. A titre d'exemple, dans le cas de particules en forme de fibres, la taille des particules correspond au diamètre des fibres. On entend par particules d'un matériau les particules prises individuellement (c'est-à-dire les éléments unitaires du matériau) sachant que le matériau peut se présenter sous la forme d'agglomérats de particules. Par le terme « taille moyenne », on entend selon la présente invention la taille de la particule qui est supérieure à la taille de 50 % en volume des particules et inférieure à la taille de 50 % en volume des particules d'une distribution de particules.

Un exemple de matériau particulaire correspond au laitier, notamment au laitier granulé de haut fourneau.

Des matériaux pouzzolaniques adaptés comprennent les fumées de silice, également connues sous le nom de micro-silice, qui sont par exemple un sous-produit de la production de silicium ou d'alliages de ferrosilicium. Il est connu comme un matériau pouzzolanique réactif. Son principal constituant est le dioxyde de silicium amorphe. Les particules individuelles ont généralement un diamètre d'environ 5 à 10 nm. Les particules individuelles peuvent s'agglomérer pour former des agrégats de 0,1 à 1 µm. Les agrégats de 0,1 à 1 µm peuvent s'agglomérer pour former des agrégats de 20 à 30 µm. Les fumées de silice ont généralement une surface spécifique BET de 10 - 30 m²/g. Les surfaces spécifiques BET peuvent être mesurées en utilisant un analyseur SA 3100 de Beckman Coulter avec l'azote comme gaz adsorbé.

D'autres matériaux pouzzolaniques comprennent les cendres volantes qui ont généralement un D10 supérieur à 10 µm et un D90 inférieur à 120 µm et ont, par exemple, un D50 de 30 à 50 µm. Le D90, également noté Dᵥ90, correspond au 90^{ème} centile de la distribution en volume de taille des grains. Autrement dit, 90 % des grains ont une taille inférieure au D90 et 10 % ont une taille supérieure au D90. Le D50, également noté Dᵥ50, correspond au 50^{ème} centile de la distribution en volume de taille des grains. Autrement dit, 50 % des grains ont une taille inférieure au D50 et 50 % ont une taille supérieure au D50. Le D10, également noté Dᵥ10, correspond au 10^{ème} centile de la distribution en volume de taille des grains. Autrement dit, 10 % des grains ont une taille inférieure au D10 et 90 % ont une taille supérieure au D10.

Les tailles moyennes et les distributions de particules peuvent être déterminées par granulométrie laser (notamment en utilisant un granulomètre laser Malvern MS2000) pour les particules de taille inférieure à 63 µm, ou par tamisage pour les particules de taille supérieure à 63 µm. Néanmoins, lorsque les particules individuelles ont une tendance à l'agrégation, il est préférable de déterminer leur taille par microscopie électronique, étant donné que la taille apparente mesurée par granulométrie par diffraction laser est alors plus importante que la taille particulaire réelle, ce qui est susceptible de fausser l'interprétation (agglomération et floculation).

La surface spécifique Blaine peut être déterminée comme cela est décrit dans la norme EN 196-6 paragraphe 4.

D'autres matériaux pouzzolaniques comprennent des matériaux riches en aluminosilicate tels que le métakaolin et les pouzzolanes naturelles ayant des origines volcaniques, sédimentaires, ou diagéniques.

Des matériaux non-pouzzolaniques adaptés comprennent des matériaux contenant du carbonate de calcium (par exemple du carbonate de calcium broyé ou précipité), de préférence un carbonate de calcium broyé. Le carbonate de calcium broyé peut, par exemple, être le Durcal^{®} 1 (OMYA, France). Les matériaux non-pouzzolaniques ont de préférence une taille moyenne de particules inférieure à 5 µm, par exemple de 1 à 4 µm. Les matériaux non-pouzzolaniques peuvent être un quartz broyé, par exemple le C800 qui est un matériau de remplissage de silice sensiblement non-pouzzolanique fourni par Sifraco, France. La surface spécifique BET préférée (déterminée par des méthodes connues décrites précédemment) du carbonate de calcium ou du quartz broyé est de 2 - 10 m²/g, généralement moins de 8 m²/g, par exemple de 4 à 7 m²/g, de préférence moins d'environ 6 m²/g. Le carbonate de calcium précipité convient également comme matériau non-pouzzolanique. Les particules individuelles ont généralement une taille (primaire) de l'ordre de 20 nm. Les particules individuelles s'agglomèrent en agrégats ayant une taille (secondaire) de 0,1 à 1 µm. Les agrégats ayant une taille (secondaire) de 0,1 à 1 µm peuvent eux-mêmes former des agrégats ayant une taille (ternaire) supérieure à 1 µm.

Un matériau non-pouzzolanique unique ou un mélange de matériaux non-pouzzolaniques peut être utilisé, par exemple du carbonate de calcium broyé, du quartz broyé ou du carbonate de calcium précipité ou un mélange de ceux-ci. Un mélange de matériaux pouzzolaniques ou un mélange de matériaux pouzzolaniques et non-pouzzolaniques peuvent également être utilisés.

Selon un exemple de réalisation, la durée entre la fin de la fenêtre d'ouvrabilité et le début de la prise de la composition hydraulique est inférieure à 36 heures, de préférence inférieure à 24 heures, plus préférentiellement inférieure à 16 heures.

Par l'expression «fenêtre d'ouvrabilité » d'une composition hydraulique on entend selon la présente invention, la durée pendant laquelle l'affaissement de la composition hydraulique, mesuré selon la norme EN 12350-2, reste supérieure ou égale à 10 mm.

Selon un exemple de réalisation de l'invention, la quantité de l'agent retardateur dans la composition hydraulique est de 0,1 à 5 % en masse d'extrait sec de l'agent retardateur par rapport à la masse du liant hydraulique sec, de préférence de 0,1 à 1,0 % en masse d'extrait sec de l'agent retardateur par rapport à la masse du liant hydraulique sec.

Selon un exemple de réalisation de l'invention, la quantité du superplastifiant dans la composition hydraulique est de 0,05 à 5 % en masse d'extrait sec du superplastifiant par rapport à la masse du liant hydraulique sec, de préférence de 0,05 à 1 % en masse d'extrait sec du superplastifiant par rapport à la masse du liant hydraulique sec, plus préférentiellement de 0,05 à 0,75 % en masse d'extrait sec du superplastifiant par rapport à la masse du liant hydraulique sec, encore plus préférentiellement de 0,05 à 0, 5 % en masse d'extrait sec du superplastifiant par rapport à la masse du liant hydraulique sec.

Selon un exemple de réalisation de l'invention, la quantité de l'agent modificateur de rhéologie dans la composition hydraulique est de 0,01 à 0,5 % en masse d'extrait sec de l'agent modificateur de rhéologie par rapport à la masse du liant hydraulique sec, de préférence de 0,025 à 0,4 % en masse d'extrait sec de l'agent modificateur de rhéologie par rapport à la masse du liant hydraulique sec.

Le liant hydraulique peut comprendre du ciment Portland, selon la norme EN 197-1.

La quantité finale du mélange retardateur dépend des propriétés considérées (par exemple temps ouvert recherché, formule de béton, etc).

La composition hydraulique est obtenue en mélangeant des granulats, le liant hydraulique, les adjuvants et de l'eau.

De façon générale, le rapport en masse d'eau efficace / liant sec (rapport E/C) peut être en général de 0,45 à 0,65.

La composition hydraulique peut comprendre d'autres types d'adjuvants que ceux déjà mentionnés, couramment utilisés dans les bétons.

Des exemples d'adjuvants pouvant être utilisés sont: agents anti-mousse, inhibiteurs de corrosion, agents de réduction du retrait, fibres, pigments, agents d'aide à la pompabilité, agents réducteurs d'alcalis réactions, agents de renforcement, composés hydrofugeants et leurs mélanges.

Selon un exemple de réalisation de l'invention, la composition hydraulique comprend en outre un agent inertant d'argile, c'est-à-dire un adjuvant permettant la neutralisation au moins partielle des effets nuisibles dus à la présence de l'argile dans une composition hydraulique, notamment une composition hydraulique comprenant un superplastifiant.

### Procédé de fabrication

La présente invention vise un procédé de fabrication d'une composition hydraulique telle que définie précédemment, comprenant l'étape consistant à mélanger le liant hydraulique, le superplastifiant, l'agent modificateur de rhéologie, éventuellement l'agent retardateur et de l'eau pour obtenir la composition hydraulique à l'état frais.

Selon un exemple de réalisation de l'invention, certains des adjuvants peuvent être introduits sous forme de poudre directement dans les divers constituants de la composition hydraulique quels que soient leurs états physiques (sous forme liquide ou solide).

Selon un exemple de réalisation de l'invention, certains des adjuvants peuvent aussi être introduits sous forme de solution liquide ou semi-liquide dans l'eau de gâchage.

Le superplastifiant et éventuellement l'agent modificateur de rhéologie et éventuellement l'agent retardateur peuvent être ajoutés séparément lors de la fabrication de la composition hydraulique. Un mélange du superplastifiant, de l'agent modificateur de rhéologie et éventuellement du retardateur peut néanmoins être réalisé au préalable, le mélange étant alors directement ajouté à la composition hydraulique.

Selon l'invention, le transport de la composition hydraulique est réalisé pendant plus de dix minutes, de préférence plus de 20 minutes, encore plus préférentiellement, plus de 30 minutes, sans agitation de la composition hydraulique.

De façon avantageuse, la composition hydraulique selon l'invention une fois fabriquée n'a pas besoin d'être agitée jusqu'à son utilisation. Par le terme « agitation » de la composition hydraulique, on entend selon la présente invention tout système mécanique dédié à réaliser une opération de mélange énergique de la composition hydraulique. Ceci ne tient pas compte des sollicitations (tremblements, etc.) que subit nécessairement la composition hydraulique pendant une opération de transport. La composition hydraulique peut donc être transportée et/ou stockée dans des sacs, des fûts, ou n'importe quel type de containeur sans agitation de la composition hydraulique. De préférence, la composition hydraulique retardée selon l'invention est stockée en emballage fermé, par exemple dans un container hermétiquement fermé. A titre d'exemple, la composition hydraulique peut être transportée dans des sacs de taille de l'ordre du mètre cube. De façon avantageuse, la composition hydraulique peut être transportée horizontalement (sans agitation de la composition hydraulique), c'est-à-dire dans un véhicule ne comprenant pas de malaxeur, par exemple dans un camion autre qu'un camion toupie.

L'utilisation d'un agent modificateur de rhéologie permet d'éviter tout phénomène de ressuage (remontée d'eau en surface du béton), de sédimentation (plus forte concentration de granulats à la base du béton) ou de consolidation (absence de pâte au niveau des contacts intergranulaires) pouvant dégrader l'aspect visuel du béton et/ou gêner voire empêcher en pratique toute remanipulation du béton (donc notamment son remélange et son utilisation), bien que la composition hydraulique ne soit pas agitée pendant son transport et/ou son stockage.

Selon un exemple de réalisation de la présente invention, la composition hydraulique comprend, en outre, un agent retardateur. La variation de l'affaissement de la composition hydraulique, mesuré selon la norme EN 12350-2, est alors avantageusement inférieure à 50 mm ou la variation de l'étalement de la composition hydraulique, mesuré avec un cône selon la norme EN 12350-2, est inférieure à 100 mm pendant au moins 12 heures, de préférence pendant au moins 1 jour, plus préférentiellement pendant au moins 2 jours, encore plus préférentiellement au moins 3 jours, sans déclenchement de la prise de la composition hydraulique. L'étalement est mesuré pour les bétons fluides et l'affaissement est mesuré pour les autres bétons.

De préférence, la consistance de la composition hydraulique est maintenue dans la même classe de consistance par rapport à l'affaissement, telle que définie par la norme EN 206-1, pendant au moins 12 heures, de préférence pendant au moins 1 jour, plus préférentiellement pendant au moins 2 jours, encore plus préférentiellement au moins 3 jours sans déclenchement de la prise de la composition hydraulique. Ceci signifie que, si juste après la fabrication de la composition hydraulique, la classe de consistance de la composition hydraulique est par exemple S4, alors la classe de consistance de la composition hydraulique reste la classe S4 pendant au moins 12 heures, de préférence pendant au moins 1 jour, plus préférentiellement pendant au moins 2 jours, encore plus préférentiellement au moins 3 jours, sans déclenchement de la prise de la composition hydraulique.

Selon un exemple de réalisation, la composition hydraulique retardée à l'état frais peut être transportée et/ou stockée sans agitation de la composition hydraulique pendant au moins 12 heures, de préférence pendant au moins 1 jour, plus préférentiellement pendant au moins 2 jours, encore plus préférentiellement au moins 3 jours. La composition hydraulique peut être stockée en extérieur à des températures variant de 5°C à 30°C. Même à des températures inférieures à 10°C, la variation de l'affaissement de la composition hydraulique mesuré selon la norme EN 12350-2 est inférieure à 50 mm ou la variation de l'étalement de la composition hydraulique mesuré avec un cône selon la norme EN 12350-2 est inférieure à 100 mm pendant au moins 12 heures, de préférence pendant au moins 1 jour, plus préférentiellement pendant au moins 2 jours, encore plus préférentiellement au moins 3 jours, sans déclenchement de la prise de la composition hydraulique.

Lorsque la composition hydraulique selon l'invention est en outre retardée, le déclenchement de la prise de la composition hydraulique peut être réalisé par n'importe quel moyen. La prise peut être obtenue sans action particulière après la fin de la fenêtre d'ouvrabilité. Le déclenchement de la prise de la composition hydraulique peut être obtenu par une action physique, mécanique ou chimique, notamment par malaxage, pompage, agitation par ondes acoustiques, etc. de la composition hydraulique, ou action chimique.

Selon un exemple de réalisation de l'invention, le procédé comprend les étapes successives suivantes :
- mélanger le liant hydraulique et de l'eau pour fabriquer la composition hydraulique à l'état frais ;
- transporter la composition hydraulique à l'état frais sans agitation de la composition hydraulique ; et
- ajouter un agent accélérateur à la composition hydraulique à l'état frais pour déclencher la prise de la composition hydraulique.

Selon un exemple de réalisation de l'invention, le procédé comprend l'ajout à la composition hydraulique d'un agent antimousse avec l'agent accélérateur Des exemples illustrent l'invention sans en limiter sa portée.

### EXEMPLES

Dans les exemples, les produits et matériaux utilisés sont disponibles auprès des fournisseurs suivants :

| | Produit ou matériau | Fournisseur |
|---|---|---|
| (1) | Ciment Portland | Lafarge - Saint Pierre La Cour ou Le Havre |
| (2) | Matériau de remplissage BL 200™ | Omya |
| (3) | Sable 0/5 mm | Saint Bonnet, France |
| (4) | Gravillon 5/10 mm | Saint Bonnet, France |
| (5) | Adjuvant CHRYSOPlast CER™ | Chryso |
| (6) | Adjuvant GLENIUM 27™ | BASF |
| (7) | Adjuvant Rheotec Z60™ | BASF |
| (8) | Adjuvant Culminal MHPC 20000 P™ | Aqualon - Ashland |
| (9) | Adjuvant Tylose MHS 3000000P6 | SE Tylose |

Le ciment était le ciment produit par la société Lafarge provenant du site de Saint Pierre La Cour ou du site du Havre qui était du type CEM I 52,5 N selon la norme EN 197-1.

Le matériau de remplissage BL 200™ était une addition minérale calcaire.

Le sable 0/5 mm et le gravillon 5/10 mm de Saint Bonnet étaient du type alluvionnaire silico-calcaire.

Le CHRYSOPlast CER™ est généralement commercialisé comme fluidifiant. Il peut toutefois également avoir une action retardatrice. Dans les présents exemples, le CHRYSOPlast CER™ a été appelé agent retardateur même s'il avait également une action fluidifiante.

L'adjuvant GLENIUM 27™ était un superplastifiant de type PCP à action immédiate.

L'adjuvant Rheotec Z60™ était un superplastifiant à action différée. Le superplastifiant Rheotec Z60™ était un PCP.

L'adjuvant Culminal MHPC 20000 P™ était un agent modificateur de rhéologie correspondant à un methylhydroxypropylcellulose.

L'adjuvant Tylose MHS 3000000P6 était un agent modificateur de rhéologie correspondant à un methylhydroxyéthylcellulose.

### Formulations de béton

La formulation (1) de béton utilisée pour réaliser les essais est décrite dans le tableau 1 suivant :

**Tableau 1 : Formulation (1) de béton**

| Composant | Proportion (en kg) pour 1 m³ de béton frais |
|---|---|
| Ciment Lafarge Saint Pierre La Cour | 280 |
| Filler calcaire BL 200™ | 50 |
| Sable 0-5 de Saint Bonnet | 990 |
| Gravillon 5-10 de Saint Bonnet | 830 |
| Eau totale | 200 |
| Adjuvants | Voir exemples |

La formulation (2) de béton utilisée pour réaliser les essais est décrite dans le tableau 2 suivant :

**Tableau 2 : Formulation (2) de béton**

| Composant | Proportion (en kg) pour 1 m³ de béton frais |
|---|---|
| Ciment Lafarge Le Havre | 280 |
| Filler calcaire BL 200™ | 56 |
| Sable 0-5 de Saint Bonnet | 910 |
| Gravillon 5-10 de Saint Bonnet | 487 |
| Gravillon 10-20 de Saint Bonnet | 433 |
| Eau totale | 182 |
| Adjuvants | Voir exemples |

La formulation (3) de béton utilisée pour réaliser les essais est décrite dans le tableau 3 suivant :

**Tableau 3 : Formulation (3) de béton**

| Composant | Proportion (en kg) pour 1 m³ de béton frais |
|---|---|
| Ciment Lafarge Le Havre | 294 |
| Filler calcaire BL 200™ | 56 |
| Sable 0-5 de Saint Bonnet | 977 |
| Gravillon 5-10 de Saint Bonnet | 820 |
| Eau totale | 180 |
| Adjuvants | Voir exemples |

### Méthode de préparation d'un béton selon la formulation (1), (2) ou (3)

- Mettre les sables et les gravillons dans le bol d'un malaxeur Zyklos (capacité 30 ou 50 L) ou Sipe (capacité 230 L) ou Pemat (capacité 500 L) ;
- A T = 0: débuter le malaxage et ajouter simultanément l'eau de mouillage en 30 secondes, puis continuer à malaxer jusqu'à 60 secondes ;
- A T = 60 secondes : arrêter le malaxage et laisser reposer pendant 4 minutes ;
- A T = 5 minutes (T0 pour le test de maintien de rhéologie) : ajouter le ciment Portland et l'agent modificateur de rhéologie et malaxer pendant 1 minute ;
- A T = 6 minutes : ajouter l'eau de gâchage (+ adjuvants éventuels) en 30 secondes tout en malaxant ;
- A T = 6 minutes et 30 secondes : malaxer pendant 1 minute 30 secondes ;
- A T = 8 minutes : arrêter le malaxage.

### Méthode de mesure de l'affaissement d'une composition hydraulique

L'affaissement a été mesuré comme cela est décrit dans la norme EN 12350-2 « Essai pour béton frais - Partie 2 : Essai d'affaissement ».

### Méthode de mesure de la résistance de compression

La résistance à la compression a été mesurée pour les mortiers comme cela est décrit dans la norme EN 196-1 « Méthode d'essais des ciments » et pour les bétons comme cela est décrit dans la norme EN 12390-2 « Essai pour béton durci - Partie 2 : Confection et conservation des éprouvettes pour essais de résistance » et PR EN 12390-3:1999. « Essai pour béton durci - Partie 3 : Résistance à la compression des éprouvettes » avec des éprouvettes cylindriques ayant un diamètre de 11 cm et une hauteur de 22 cm.

### Méthode de mesure du temps de prise d'une composition hydraulique

Un enregistreur de température a été utilisé, par exemple un enregistreur de température commercialisé par la société Testo. La composition hydraulique a été placée dans une enceinte adiabatique. L'enregistreur a été disposé dans la composition hydraulique. Une acquisition de la température était réalisée toutes les minutes. La température de la composition hydraulique tendait à diminuer après la fabrication de la composition hydraulique pour se stabiliser à un palier de température constant jusqu'à la prise pendant laquelle la température a augmenté temporairement. Pour des mesures réalisées à plus de 15°C, le début de la prise correspondait, sauf indication contraire, à la durée mesurée à partir de 24 heures après la fabrication de la composition hydraulique jusqu'à l'instant la température augmenté de deux degrés par rapport au palier de température pour une composition hydraulique.

### EXEMPLE 1

Deux bétons B1 et B2 ont été préparés selon la formulation (1) à 20°C. Pour chaque béton B1 et B2, environ 20 litres de béton ont été réalisés.

L'agent retardateur pour les bétons B1 et B2, était le CHRYSOPlast CER™. Chaque béton B1 et B2 comprenait 0,35 % en masse d'extrait sec de l'agent retardateur par rapport à la masse de ciment.

L'agent modificateur de rhéologie pour les bétons B1 et B2, était le Culminal MHPC 20000 P™. Chaque béton B1 et B2 comprenait 0,11 % en masse d'extrait sec de l'agent modificateur de rhéologie par rapport à la masse de ciment.

Le superplastifiant pour le béton B1, était le GLENIUM 27™. Le béton B1 comprenait 0,4 % en masse d'extrait sec de GLENIUM 27™ par rapport à la masse de ciment.

Le superplastifiant pour le béton B2, était le Rheotec Z60™. Le béton B2 comprenait 0,4 % en masse d'extrait sec de Rheotec Z60™ par rapport à la masse de ciment.

Chaque béton B1 et B2 a été placé dans un seau de 25 litres. Les seaux ont été fermés hermétiquement par un couvercle, puis fixés à une palette qui a été transportée par un charriot élévateur pendant 10 minutes, sans agitation, à une vitesse moyenne d'une douzaine de kilomètre par heure. Le charriot élévateur ne comprenait par d'amortisseurs. Les bétons B1 et B2 ont ensuite été conservés au repos, sans agitation.

Quatre échantillons ont été conservés pour chaque béton. Des mesures d'affaissement ont été réalisées, à 20°C, à 5 minutes pour le premier échantillon, à 24 heures pour le deuxième échantillon, à 48 heures pour le troisième échantillon et à 72 heures pour le quatrième échantillon. Chaque échantillon a été mélangé peu avant la mesure. Les résultats de ces essais sont rassemblés dans le tableau 4 suivant :

**Tableau 4**

| Béton | Superplastifiant (% en masse d'extrait sec / masse ciment) | Affaissement (mm) | | | |
|---|---|---|---|---|---|
| | | 5 min | 24 h | 48 h | 72 h |
| B1 | GLENIUM 27™ (0,40 %) | 240 | 230 | 220 | 170 |
| B2 | Rheotec Z60™ (0,40 %) | 220 | 255 | 250 | 220 |

La variation de l'affaissement sur 48 heures était inférieure à 50 mm pour les bétons B1 et B2,. Les bétons B1 et B2 étaient donc satisfaisants. De plus, la variation de l'affaissement sur 72 heures était inférieure à 50 mm pour le béton B2,. En outre, aucun ressuage ni aucune sédimentation n'a été sensiblement observé pour les bétons B1 et B2, et ce en dépit d'un transport sans agitation.

Le temps de prise était d'environ 88 heures pour les bétons B1 et B2. La durée entre la fin de la fenêtre d'ouvrabilité et le début de la prise des bétons B1 et B2 était donc inférieure à 16 heures.

### EXEMPLE 2

Un béton B3 a été préparé selon la formulation (1) à 20°C. Trois gâchées d'environ 500 litres chacune ont été préparées.

L'agent retardateur était le CHRYSOPlast CER™. Le béton B3 comprenait 0,35 % en masse d'extrait sec de l'agent retardateur par rapport à la masse de ciment.

L'agent modificateur de rhéologie était le Culminal MHPC 20000 P™. Le béton B3 comprenait 0,13 % en masse d'extrait sec de l'agent modificateur de rhéologie par rapport à la masse de ciment.

Le superplastifiant était le GLENIUM 27™. Le béton B3 comprenait 0,40 % en masse d'extrait sec de GLENIUM 27™ par rapport à la masse de ciment.

Les gâchées ont été réalisées dans un malaxeur de type Pemat. Les trois gâchées ont été homogénéisées par 70 tours dans un camion toupie Fiori de 2 m³. Trois sac imperméables P1, P2 et P3 à double enveloppe ont été remplis chacun d'environ 400 litres du béton B3.

Les sacs ont été transportés par camion, sans agitation, pendant 75 minutes, comprenant 15 minutes à une vitesse moyenne de 110 km/h et 60 minutes à une vitesse moyenne de 80 km/h.

Les sacs ont ensuite été maintenus au repos.

L'affaissement a été mesuré à 4 heures pour le béton B3 du sac P1,. L'affaissement a été mesuré à 24 heures pour le béton B3 du sac P2, et l'affaissement a été mesuré à 48 heures pour le béton B3 du sac P3. Le béton a été mélangé peu avant la mesure. Les résultats de ces essais sont rassemblés dans le tableau 5 suivant :

**Tableau 5**

| Sac de béton | Affaissement (mm) | Instant de mesure |
|---|---|---|
| P1 | 190 | 4 h |
| P2 | 185 | 24 h |
| P3 | 170 | 48 h |

Le béton B3 a été maintenu dans la même classe de consistance (classe S4) pendant 48 heures. Aucun ressuage, ni aucun de tassement des granulats n'a été observé pour chaque sac. Les sacs P1, P2 et P3 ont pu être vidés sans difficulté du camion toupie. Le béton B3 s'écoulait de lui-même sans devoir le vibrer. En outre, les sacs P1, P2 et P3 se sont vidés intégralement sans qu'il reste d'amas de pâte ou de granulats sur les parois.

### EXEMPLE 3

Un béton B4 a été préparé selon la formulation (2) à 20°C. Une gâchée d'environ 500 litres a été préparée.

L'agent retardateur était le CHRYSOPlast CER™. Le béton B4 comprenait 0,3 % en masse d'extrait sec de l'agent retardateur par rapport à la masse de ciment.

L'agent modificateur de rhéologie était le Culminal MHPC 20000 P™. Le béton B3 comprenait 0,13 % en masse d'extrait sec de l'agent modificateur de rhéologie par rapport à la masse de ciment.

Le supérplastifiant était le GLENIUM 27™. Le béton B3 comprenait 0,3 % en masse d'extrait sec de GLENIUM 27™ par rapport à la masse de ciment.

La gâchée a été réalisée dans un malaxeur de type Pemat et a été homogénéisée par 70 tours dans un camion toupie Fiori de 2 m³. Un sac à double enveloppe a été rempli d'environ 400 litres du béton B4.

Le sac a été transporté par camion, sans agitation. Le sac a ensuite été maintenu au repos.

Deux échantillons ont été conservés. Des mesures d'affaissement ont été réalisées, à 20°C, à 5 minutes pour le premier échantillon et à 48 heures pour le second échantillon. Chaque échantillon a été mélangé juste avant la mesure. Les résultats de ces essais sont rassemblés dans le tableau 6 suivant :

**Tableau 6**

| Béton | Affaissement à 5 min (mm) | Affaissement à 48 h (mm) |
|---|---|---|
| B4 | 220 | 170 |

La variation de l'affaissement du béton B4 était inférieure à 50 mm sur 48 heures. Aucun ressuage ni aucun tassement du squelette granulaire n'a été observé après stockage.

### EXEMPLE 4

Deux bétons B5 et B6 ont été préparés selon la formulation (4) à 20°C. Pour chaque béton B5 et B6, environ 20 litres de béton ont été réalisés.

L'agent retardateur pour les bétons B5 et B6 était le CHRYSOPlast CER™. Chaque béton B5 et B6 comprenait 0,3 % en masse, exprimée en extrait sec, de l'agent retardateur par rapport à la masse de ciment.

Le superplastifiant pour les bétons B5 et B6 était le GLENIUM 27™. Chaque béton B5 et B6 comprenait 0,3 % en masse, exprimée extrait sec, de l'agent modificateur de rhéologie par rapport à la masse de ciment.

L'agent modificateur de rhéologie pour le béton B5 était le Culminal MHPC 20000 P™. Le béton B5 comprenait 0,13 % en masse, exprimée extrait sec, de l'agent modificateur de rhéologie par rapport à la masse de ciment.

L'agent modificateur de rhéologie pour le béton B6 était le Tylose MHS 300000P6. Le béton B6 comprenait 0,13 % en masse, exprimée extrait sec, de l'agent modificateur de rhéologie par rapport à la masse de ciment.

Chaque béton B1 et B2 a été placé dans un seau de 25 litres. Les seaux ont été fermés hermétiquement par un couvercle, puis fixés à une palette qui a été transportée par un charriot élévateur pendant 10 minutes, sans agitation, à une vitesse moyenne d'une douzaine de kilomètre par heure. Le charriot élévateur ne comprenait par d'amortisseurs. Les bétons B1 et B2 ont ensuite été conservés au repos, sans agitation.

Quatre échantillons ont été conservés pour chaque béton. Des mesures d'affaissement ont été réalisées, à 20°C, à 5 minutes pour le premier échantillon, à 24 heures pour le deuxième échantillon, à 48 heures pour le troisième échantillon et à 72 heures pour le quatrième échantillon. Chaque échantillon a été mélangé peu avant la mesure. Les résultats de ces essais sont rassemblés dans le tableau 7 suivant :

**Tableau 7**

| Béton | Agent modificateur de rhéologie (% en masse d'extrait sec / masse ciment) | Affaissement (mm) | | |
|---|---|---|---|---|
| | | 5 min | 24 h | 48 h |
| B5 | Culminal MHPC 20000 P™ (0,13 %) | 235 | 225 | 215 |
| B6 | Tylose MHS 300000P6 (0,04 %) | 240 | 230 | 220 |

La variation de l'affaissement sur 48 heures était inférieure à 50 mm pour les bétons B5 et B6. Les bétons B5 et B6 étaient donc satisfaisants. En outre, aucun ressuage ni aucune sédimentation n'a été sensiblement observé pour les bétons B5 et B6, et ce en dépit d'un transport sans agitation.

## Revendications

1. Procédé de transport d'une composition hydraulique à l'état frais comprenant :
- de 220 à 500 kg, par mètre cube de la composition hydraulique à l'état frais, d'un liant hydraulique comprenant du ciment Portland ;
- de 400 à 1800 kg, par mètre cube de la composition hydraulique à l'état frais, d'un sable ayant un D10 supérieur à 0,1 mm et un D90 inférieur à 4 mm ;
- de 150 à 1000 kg, par mètre cube de la composition hydraulique à l'état frais, d'un gravier ayant un D10 supérieur à 4 mm et un D90 inférieur à 10 mm ;
- de 0,05 à 5 % en masse d'extrait sec par rapport à la masse du liant hydraulique d'un superplastifiant comprenant un polymère polyphosphate de polyoxyde d'alkylène, un polymère polyphosphonate de polyoxyde d'alkylène, un polymère polysulfonate de polyoxyde d'alkylène ou un polymère polycarboxylate de polyoxyde d'alkylène ; et
- de 0,01 à 0,5 % en masse d'extrait sec par rapport à la masse du liant hydraulique d'un agent modificateur de rhéologie, comprenant une cellulose ou un dérivé de cellulose,
le transport étant réalisé pendant plus de dix minutes sans agitation par tout système mécanique dédié à réaliser une opération de mélange énergique de la composition hydraulique.

2. Procédé selon la revendication 1, dans lequel à composition hydraulique est transportée sur un véhicule ne comprenant pas de malaxeur.

3. Procédé selon la revendication 1 ou 2, dans lequel la composition hydraulique est transportée dans un container hermétiquement fermé.

4. Procédé selon l'une quelconque des revendications 1 à 3, dans lequel la quantité du superplastifiant est de 0,05 à 1 % en masse d'extrait sec par rapport à la masse du liant hydraulique.

5. Procédé selon l'une quelconque des revendications 1 à 4, dans lequel la composition hydraulique comprend, en outre, de 0,1 à 5 % en masse d'extrait sec par rapport à la masse du liant hydraulique d'un agent retardateur, le temps de prise de la composition hydraulique étant supérieur ou égal à 12 heures sans déclenchement de la prise de la composition hydraulique et la variation de l'affaissement de la composition hydraulique mesuré selon la norme EN 12350-2 étant inférieure à 50 mm ou la variation de l'étalement de la composition hydraulique mesuré avec un cône selon la nonne EN 12350-2 étant inférieure à 100 mm pendant au moins 12 heures sans déclenchement de la prise de la composition hydraulique.

6. Procédé selon la revendication 5, dans lequel l'agent retardateur comprend un acide hydroxycarboxylique ou un sel d'acide hydroxycarboxylique.

7. Procédé selon l'une quelconque des revendications 1 à 6, comprenant les étapes successives suivantes :
- mélanger le liant hydraulique et de l'eau pour fabriquer la composition hydraulique à l'état frais ;
- transporter la composition hydraulique à l'état frais sans agitation de la composition hydraulique ; et
- ajouter un agent accélérateur à la composition hydraulique à l'état frais pour déclencher la prise de la composition hydraulique.

8. Procédé selon la revendication 7, comprenant l'ajout à la composition hydraulique d'un agent antimousse avec l'agent accélérateur.

## Patentansprüche

1. Verfahren zum Transport einer hydraulischen Zusammensetzung in frischem Zustand, die Folgendes umfasst:
- 220 bis 500 kg, pro Kubikmeter der hydraulischen Zusammensetzung in frischem Zustand, eines hydraulischen Bindemittels, das Portland Zement umfasst;
- 400 bis 1800 kg, pro Kubikmeter der hydraulischen Zusammensetzung in frischem Zustand, eines Sandes, der ein D10 größer als 0,1 mm und ein D90 kleiner als 4 mm aufweist;
- 150 bis 1000 kg, pro Kubikmeter der hydraulischen Zusammensetzung in frischem Zustand, eines Kies, der ein D10 größer als 4 mm und ein D90 kleiner als 10 mm aufweist;
- 0,05 bis 5% der Masse von Trockenextrakt im Verhältnis zur Masse des hydraulischen Bindemittels, eines Superplastifizierers, der ein Polyphosphatpolymer von Polyalkylenoxid, ein Polyphosphonatpolymer von Polyalkylenoxid, ein Polysulfonatpolymer von Polyalkylenoxid oder ein Polycarboxylatpolymer von Polyalkylenoxid umfasst; sowie
- 0,01 bis 0,5% der Masse von Trockenextrakt im Verhältnis zur Masse des hydraulischen Bindemittels, eines Rheologiemodifiziermittels, das Cellulose oder ein Cellulosederivat umfasst,
wobei der Transport während mehr als 10 Minuten ohne Rühren durch das gesamte mechanische System durchgeführt wird, das für einen Arbeitsgang des energischen Mischens der hydraulischen Zusammensetzung vorgesehen ist.

2. Verfahren nach Anspruch 1, wobei die hydraulische Zusammensetzung auf einem Beförderungsmittel transportiert wird, das kein Rührwerk umfasst.

3. Verfahren nach Anspruch 1 oder 2, wobei die hydraulische Zusammensetzung in einem hermetisch verschlossenen Behälter transportiert wird.

4. Verfahren nach einem der Ansprüche 1 bis 3, wobei die Menge des Superplastifizierers zwischen 0,05 bis 1 % der Masse von Trockenextrakt im Verhältnis zur Masse des hydraulischen Bindemittels beträgt.

5. Verfahren nach einem der Ansprüche 1 bis 4, wobei die hydraulische Zusammensetzung ferner 0,1 bis 5% der Masse von Trockenextrakt im Verhältnis zur Masse des hydraulischen Bindemittels eines Hemmstoffs umfasst, die Zeit des Abbindens der hydraulischen Zusammensetzung ohne die Auslösung des Abbindens der hydraulischen Zusammensetzung größer oder gleich 12 Stunden ist und die Änderung des Setzmaßes der hydraulischen Zusammensetzung gemessen entsprechend der Norm EN 12350-2 kleiner als 50 mm ist oder die Verteilung der hydraulischen Zusammensetzung gemessen mit einem Konus entsprechend der Norm EN 12350-2 kleiner als 100 mm ist während mindestens 12 Stunden ohne die Auslösung des Abbindens der hydraulischen Zusammensetzung.

6. Verfahren nach Anspruch 5, bei dem der Hemmstoff eine Hydroxycarbonsäure oder ein Salz einer Hydroxycarbonsäure umfasst.

7. Verfahren nach einem der Ansprüche 1 bis 6, das die nachstehenden aufeinanderfolgenden Schritte umfasst:
- Mischen des hydraulischen Bindemittels und Wasser, um die hydraulische Zusammensetzung in frischem Zustand herzustellen;
- Transportieren der hydraulischen Zusammensetzung in frischem Zustand ohne Rühren der hydraulischen Zusammensetzung; und
- Hinzufügen eines Beschleunigers zu der hydraulischen Zusammensetzung in frischem Zustand, um das Abbinden der hydraulischen Zusammensetzung auszulösen.

8. Verfahren nach Anspruch 7, welches das Hinzufügen eines Antischaummittels mit dem Beschleuniger zu der hydraulischen Zusammensetzung umfasst.

## Claims

1. Method for transporting a fresh hydraulic composition comprising:
- from 220 to 500 kg, per cubic metre of the fresh hydraulic composition, of a hydraulic binder comprising Portland cement;
- from 400 to 1800 kg, per cubic metre of the fresh hydraulic composition, of a sand having a D10 of greater than 0.1 mm and a D90 of less than 4 mm;
- from 150 to 1000 kg, per cubic metre of the fresh hydraulic composition, of a gravel having a D10 of greater than 4 mm and a D90 of less than 10 mm;
- from 0.05 to 5 %, by mass of dry extract relative to the mass of the hydraulic binder, of a superplasticiser comprising a polyphosphate polyoxyalkylene polymer, a polyphosphonate polyoxyalkylene polymer, a polysulfonate polyoxyalkylene polymer or a polycarboxylate polyoxyalkylene polymer;
- from 0.01 to 5 %, by mass of dry extract relative to the mass of the hydraulic binder, of a rheology-modifying agent comprising a cellulose or a cellulose derivative, the hydraulic composition being transported for more than ten minutes without mixing and by means of any mechanical system intended for vigorously mixing the hydraulic composition.

2. Method according to claim 1, wherein the hydraulic composition is transported in a vehicle which does not comprise a mixer.

3. Method according to either claim 1 or claim 2, wherein the hydraulic composition is transported in a hermetically-sealed container.

4. Method according to any of claims 1 to 3, wherein the quantity of the superplasticiser is from 0.05 to 1 % by mass of dry extract relative to the mass of the hydraulic binder.

5. Method according to any of claims 1 to 4, wherein the hydraulic composition further comprises from 0.1 to 5 %, by mass of dry extract relative to the mass of the hydraulic binder, of a retarding agent, the setting time of the hydraulic composition being greater than or equal to 12 hours without causing the setting of the hydraulic composition and the variation of the slump of the hydraulic composition measured according to the EN 12350-2 standard being less than 50 mm, or the variation of the spread of the hydraulic composition, as measured with a cone according to the EN 12350-2 standard, being less than 100 mm for at least 12 hours without causing the setting of the hydraulic composition.

6. Method according to claim 5, wherein the retarding agent comprises a hydroxycarboxylic acid or a salt of hydroxycarboxylic acid.

7. Method according to any of claims 1 to 6, comprising the following successive steps:
- mixing the hydraulic binder and water to produce the fresh hydraulic composition;
- transporting the fresh hydraulic composition without mixing the hydraulic composition; and
- adding an accelerating agent to the fresh hydraulic composition in order to trigger the setting of the hydraulic composition.

8. Method according to claim 7 comprising adding an anti-foaming agent with the accelerating agent to the fresh hydraulic composition.
